(19) **Europäisches Patentamt**
**European Patent Office**
**Office européen des brevets**

(11) **EP 1 314 175 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**08.02.2012 Patentblatt 2012/06**

(45) Hinweis auf die Patenterteilung:
**12.09.2007 Patentblatt 2007/37**

(21) Anmeldenummer: **01974185.9**

(22) Anmeldetag: **14.08.2001**

(51) Int Cl.:
**H01G 9/042** (2006.01)

(86) Internationale Anmeldenummer:
**PCT/EP2001/009373**

(87) Internationale Veröffentlichungsnummer:
**WO 2002/017338 (28.02.2002 Gazette 2002/09)**

(54) **KONDENSATORANODE AUF BASIS NIOB**

NIOBIUM BASED CAPACITOR ANODE

ANODE DE CONDENSATEUR A BASE DE NIOBIUM

(84) Benannte Vertragsstaaten:
**DE GB PT**

(30) Priorität: **25.08.2000 DE 10041901**

(43) Veröffentlichungstag der Anmeldung:
**28.05.2003 Patentblatt 2003/22**

(73) Patentinhaber: **H.C. Starck GmbH**
**38642 Goslar (DE)**

(72) Erfinder:
• **SCHNITTER, Christoph**
**31188 Holle-Sottrum (DE)**
• **REICHERT, Karlheinz**
**38304 Wolfenbüttel (DE)**

(56) Entgegenhaltungen:
**WO-A-00/15555**

EP 1 314 175 B2

**Beschreibung**

Die vorliegende Erfindung betrifft Anoden für Elektrolytkondensatoren auf Basis Niob sowie ein Verfahren zur Herstellung derartiger Anoden.

In der Literatur sind insbesondere die Erdsäuremetalle Niob und Tantal als Ausgangsmaterialien für die Herstellung derartiger Anoden und Kondensatoren beschrieben. Die Herstellung der Anoden erfolgt durch Versinterung feinteiliger Metallpulver zur Erzeugung einer Struktur mit großer Oberfläche, Oxidation der Oberfläche des Sinterkörpers zur Erzeugung einer nichtleitenden Isolierschicht und Aufbringen der Gegenelektrode in Form einer Schicht aus Mangandioxid oder eines leitfähigen Polymeren.

Technische Bedeutung für die Kondensatorherstellung hat bisher lediglich Tantalpulver erlangt.

Die wesentlichen spezifischen Eigenschaften derartiger Kondensatoren werden durch die spezifische Oberfläche, die Dicke der den Isolator bildenden Oxidschicht d und die relative Dielektriziätskonstante $\varepsilon_r$ bestimmt. Damit berechnet sich die Kapazität C wie folgt:

$$C = \varepsilon_0\,\varepsilon_r \cdot \frac{A}{d} \qquad\qquad (I)$$

wobei

$$\varepsilon_0 = 0{,}885 \cdot 10^{-11}\ F/m \qquad (II)$$

dielektrische Feldkonstante und A die Kondensatoroberfläche bezeichnet.

Die isolierende Oxidschicht des Kondensators wird üblicherweise elektrolytisch durch Eintauchen der die Kondensatoranode bildenden Niob- bzw. Tantal-Sinterstruktur in einen Elektrolyten, üblicherweise verdünnte Phosphorsäure, und Anlegen eines elektrischen Feldes erzeugt. Die Dicke der Oxidschicht ist der Elektrolysespannung, die mit anfänglicher Strombegrenzung solange angelegt wird, bis der Elektrolysestrom auf 0 abgefallen ist, direkt proportional. Üblicherweise wird die Oxidschicht bei einer solchen Elektrolysespannung ("Formierspannung") erzeugt, die dem 1,5- bis 4-fachen der vorgesehenen Betriebsspannung des Kondensators entspricht.

Die relative Dielektrizitätskonstante für Tantalpentoxid wird üblicherweise mit 27, die von von Niobpentoxid üblicherweise mit 41 angegeben. Das Dickenwachstum der Oxidschicht bei der Formierung liegt für Tantal bei etwa 2 nm/V Formierspannung, für Niob bei etwa 3,7 nm/V, so dass die größere relative Dielektrizitätskonstante des Niobs durch die größere Dicke der Oxidschicht bei gleicher Formierspannung kompensiert wird.

Die Miniaturisierung der Kondensatoren erfolgt über eine Vergrößerung der spezifischen Oberfläche, in dem für die Erzeugung der Sinterstruktur feinere Pulver eingesetzt werden und die Sintertemperatur herabgesetzt wird.

Aufgrund der erforderlichen Dicke der isolierenden Oxidschicht sind der Miniaturisierung der Kondensatoren, d.h. der Erhöhung der spezischen Kapazität Grenzen gesetzt, da innerhalb der oxidierten Sinterstruktur noch eine ausreichende leitende Phase zur Stromleitung und Begrenzung der entstehenden ohmschen Wärme vorhanden sein muss. Mit zunehmender Miniaturisierung der Kondensatoren steigt damit die Neigung zur Oxidation. Dies gilt insbesondere für Niob-Kondensatoren, die im Vergleich zu Tantalkondensatoren eine dickere isolierende Oxidschicht bei gleicher Formierspannung erfordern.

Die Anode gemäß der Erfindung ist durch die Merkmale von Anspruch 1 definiert. Das Verfahren gemäß der Erfindung ist im Anspruch 4 definiert.

Es wurde nun gefunden, dass die Kondensatoreigenschaften vorteilhaft beeinflusst werden, weil bei der Formierung ein Elektrolyt eingesetzt wird, der ein mehrzähniges organisches Säureanion enthält, welches mit Niob stabile Komplexe ausbildet. Geeignete organische Säuren für den Einsatz im Formierelektrolyten sind z.B.: Oxalsäure, Milchsäure, Zitronensäure, Weinsäure, Phthalsäure, bevorzugtes Säureanion ist das Anion der Oxalsäure.

Der Elektrolyt enthält die organische Säure in wässriger Lösung Bevorzugt wird ein wasserlösliches Salz der organischen Säure eingesetzt. Als Kationen geeignet sind solche, die die Oxidschicht nicht negativ beeinflussen, und deren Komplexbildungskonstante mit dem entsprechenden Säureanion niedriger ist als die von Niob mit diesem Säureanion, so daß ein Austausch von Niobionen durch die entsprechenden Metallionen stattfinden kann. Bevorzugt sind Kationen, die bei Ihrem Einbau in die Oxidschicht die Kondensatoreigenschaften positiv beeinflussen. Ein besonders bevorzugtes Kation ist Tantal.

Insbesondere bevorzugt als Formierelektrolyt ist eine wässrige Lösung von Tantaloxalat. Die Erfindung wird nachfolgend ohne Beschränkung der Allgemeinheit am Beispiel des Tantaloxalates beschrieben.

Durch das erfindungsgemäße Formierverfahren werden Kondensatoren mit gegenüber der üblichen Formierung in verdünnter Phosphorsäure um bis zu 50 % erhöhter Kapazität erzielt. Der spezifische Leckstrom liegt unterhalb 0,5 nA/μFV.

Es wurde gefunden, daß die kapazitätserhöhende Wirkung um so größer ist, je höher die Leitfähigkeit des Elektrolyten bei der Formierung ist.

Die Elektrolytkonzentration wird vorzugsweise so eingestellt, dass die Leitfähigkeit des Elektrolyten zwischen 1,5 und 25 mS/cm, besonders bevorzugt 5 bis 20 mS/cm, insbesondere bevorzugt 8 bis 18 mS/cm, aufweist.

Bei der Formierung ist es vorteilhaft, den Formierstrom anfänglich auf 30 bis 150 mA/m$^2$ Anodenfläche zu begrenzen. Dabei werden vorzugsweise bei Elektrolyten mit niedrigerer Leitfähigkeit auf niedrigere Werte begrenzte Formierströme eingesetzt. Im Falle höherer Leitfähigkeit des Elektrolyten können Formierströme im oberen Bereich eingesetzt werden.

Der erfindungsgemäße kapazitätserhöhende Effekt wird auf einen spezifischen Abtrag von Niob von der Anodenstruktur während der Formierung zurückgeführt. Nach der Formierung werden in dem Formierelektrolyten Niobgehalte im Bereich von einigen Gew.-% der eingesetzten Anodenstruktur gefunden. Typischerweise beträgt die Niobauflösung während der Formierung 3 bis 5 Gew.-%, in einigen Fällen sogar bis zu 10 Gew.-% der Anodenstruktur. Offenbar erfolgt der Abtrag spezifisch derart, daß die effektive Kondensatorfläche gegenüber der Formierung in verdünnter Phosphorsäure vergrößert wird. Bei der üblichen Formierung in Phosphorsäure werden aufgrund der Volumenvergrößerung durch Ausbildung der Oxidschicht Poren verschlossen bzw. verstopft, so daß die effektive Kondensatoroberfläche reduziert wird. Offenbar greift das organische Säureanion gerade an solchen Oberflächenbereichen an, die besonders enge Porenkanäle begrenzen.

Ein weiterer vorteilhafter Effekt der Erfindung besteht darin, daß die Oxidschicht zweischichtig ausgebildet wird: einer äußeren, die Isolatorschicht bildenden Pentoxidschicht und einer inneren, zwischen Pentoxidschicht und Metallkern liegenden, leitfähigen Suboxidschicht. REM-Aufnahmen von Bruchflächen gebrochenen formierten Anoden lassen sehr dicke Oxidschichten erkennen, die einem Schichtdickenwachstum von 5 nm/V Formierspannung oder mehr entsprechen, wobei teilweise nur ein verschwindend kleiner Metallkern eingeschlossen ist. Unter dem Lichtmikroskop ist anhand von Farbunterschieden (violett-grün) erkennbar, daß die Oxidschicht aus zwei benachbarten Teilschichten besteht. Die Suboxidschicht wirkt als Barriere für die Sauerstoffdiffusion aus der Pentoxidschicht und trägt damit zur Langzeitstabilität der Anode bei.

Ein weiterer Vorteil der Erfindung besteht darin, daß das Kation der Elektrolytlösung in geringem Umfang auf der Anodenoberfläche abgeschieden wird und während der Oxidation aufgrund der Diffusionskinetik in Konkurrenz mit der Diffusion von Sauerstoff in die Anode und von Niob zur Anodenoberfläche stabilisierend in die Oxidschicht eingebaut wird. So ist Tantal, das keine stabilen Suboxide bildet, geeignet, die Pentoxidschicht zu stabilisieren. Da Niob im Vergleich zu Tantal die höhere Platzwechselwahrscheinlichkeit besitzt (s. z.B. J. Perriere, J. Siejka, J. Electrochem. Soc. 1983, 130(6), 1260-1273), ist das Niob während der Oxidation in der Lage, oberflächlich aufgebrachtes Tantal "zu überspringen", so daß das Tantal innerhalb der wachsenden Oxidschicht scheinbar nach innen wandert. Es reichert sich an der Innenseite der Pentoxidschicht an und stabilisiert diese. In erfindungsgemäß formierten Anoden werden Tantalgehalte von 1500 bis 10000 ppm, überwiegend 3000 bis 6000 ppm bezogen auf die Anode gefunden, wobei das Tantal in der Pentoxidschicht konzentriert ist. Ein Teil des kapazitätserhöhenden Effektes der vorliegenden Erfindung ist wahrscheinlich einem positiven Einfluß auf das Pentoxid-Schichtdickenwachstum und ggf. die Dielektrizitätskonstante zurückzuführen.

Gegenstand der Erfindung sind auch Anoden mit Sperrschicht für Kondensatoren auf Basis Niob, bestehend aus einem Niob-Metallkern, einer leitenden Niob-Suboxidschicht und einer dielektrischen Sperrschicht aus Niobpentoxid. Vorzugsweise weist die Niobsuboxidschicht eine Dicke von mindestens 30 nm, besonders bevorzugt mindestens 50 nm auf

Besonders bevorzugte erfindungsgemäße Anoden weisen eine Pentoxidsperrschicht mit einem Gehalt von 1500 bis 5000 ppm Tantal bezogen auf die Anode auf.

## **Beispiele**

a) Herstellung von Niob-Pulver

Es wurde ein Niobpulver eingesetzt, welches nach einem veröffentlichten Vorschlag der Anmelderin (DE 198 31 280 A1) hergestellt wurde. Das Pulver wies folgende Gehalte an Fremdelementen (ppm) auf:

Mg: 230

(fortgesetzt)

| | |
|---|---|
| O: | 15425 |
| H: | 405 |
| N: | 111 |
| C: | 31 |
| Fe: | 3 |
| Cr: | 2 |
| Ni: | 2 |
| Ta: | 78 |

Ferner wurden die folgenden physikalischen Eigenschaften bestimmt:

| | |
|---|---|
| eine BET-Oberfläche von | 4,61 m$^2$/g, |
| eine FSSS-Teilchengröße von | 4,2 μm, |
| eine Schüttdichte von | 17,9 g/inch$^3$, |
| eine Fließfähigkeit von | 21s, |

eine nach Mastersizer bestimmte Teilchengrößenverteilung von

| | |
|---|---|
| D10: | 78,5 μm |
| D50: | 178,4 μm |
| D90: | 288,8 μm, |

sowie eine aus REM-Aufnahmen ermittelte

Primärteilchengröße von etwa 550 nm.

b) Herstellung von Nb-Anoden:

Aus dem Pulver wurden in entsprechenden Matrizen unter Einbringung eines Tantaldrahtes bei einer Preßdichte von 2,9 g/cm$^3$ Anoden hergestellt und bei einer Temperatur von 1125°C für 20 Minuten gesintert.

**Tabelle 1:**

| | Formierelektrolytlösung | | | | Kondensatoreigenschaften | | |
|---|---|---|---|---|---|---|---|
| Bsp.Nr. | Elektrolyt | Ta Gew.-% | C$_2$O$_4$$^{2-}$ Gew.-% | Leitfähigkeit mS/cm | Ta-Gehalt ppm | CV/g μFV/g | Ir/CV nA/μFV |
| 1 | 0,1 % H$_3$PO$_4$ | - | - | 2,53 | n.b | 80 K | 0,23 |
| 2 | 0,25% H$_3$PO$_4$ | - | - | 4,58 | n.b. | 87 K | 0,44 |
| 3 | Oxalsäure in H$_2$O | - | 0,10 | 2,86 | n.b. | 92 K | 0,75 |
| 4 | Oxalsäure in H$_2$O | - | 0,20 | 5,53 | n.b. | 97 K | 0,83 |
| 5 | Ta-Oxalat in H$_2$O | 0,05 | 0,05 | 1,44 | n.b. | 87 K | 0,26 |
| 6 | Ta-Oxalat in H$_2$O | 0,1 | 0,07 | 1,77 | 13500 | 89 K | 0,5 |

(fortgesetzt)

| Bsp.Nr. | Formierelektrytlösung | | | | Kondensatoreigenschaften | | |
|---|---|---|---|---|---|---|---|
| | Elektrolyt | Ta Gew.-% | $C_2O_4^{2-}$ Gew.-% | Leitfähigkeit mS/cm | Ta-Gehalt ppm | CV/g $\mu$FV/g | Ir/CV nA/ $\mu$FV |
| 7 | Ta-Oxalat in 0,1 % $H_3PO_4$ | 0,1 | 0,07 | 3,83 | 6700 | 90 K | 0,25 |
| 8 | Ta-Oxalat in $H_2O$ | 0,3 | 0,21 | 4,86 | 9800 | 103 K | 0,51 |
| 9 | Ta-Oxalat in $H_2O$ | 0,4 | 0,29 | 6,36 | 3400 | 88 K | 0,64 |
| 10 | Ta-Oxalat in $H_2O$ | 0,4 | 0,34 | 7,43 | 2800 | 94 K | 0,48 |
| 11 | Ta-Oxalat in $H_2O$ | 0,5 | 0,35 | 7,8 | 2700 | 108 K | 0,43 |
| 12 | Ta-Oxalat in $H_2O$ | 0,4 | 0,39 | 8,5 | 3100 | 92 K | 0,57 |
| 13 | Ta-Oxalat in $H_2O$ | 0,75 | 0,51 | 10,22 | 4600 | 115 K | 0,30 |
| 14 | Ta-Oxalat in $H_2O$ | 0,75 | 0,53 | 11,41 | 3300 | 123 K | 0,48 |
| 15 | Ta-Oxalat in $H_2O$ | 1,25 | 0,84 | 16,63 | 5300 | 111 K | 0,49 |
| 16 | Ta-Oxalat in $H_2O$ | 1 | 1 | 22,8 | 4800 | 141 K | 1,35 |

c) Anodisierung

Zur Herstellung der isolierenden Oxidschicht auf den gesinterten Anoden wurden diese in eine Elektrolytlösung eingetaucht, und unter Begrenzung des Stromes auf 100mA/g Anodengewicht bis zu einer Spannung von 40 V bei einer Temperatur von 80°C anodisiert. Nach Erreichen der Spannung von 40V wurde noch 2 Stunden bei dieser Spannung gehalten, wobei die Stromstärke gegen Null abfiel.
Die Elektrolytlösung hatte die in Tabelle 1 angegebene Zusammensetzung und die ebenfalls angegebene spezifische Leitfähigkeit.

d) Messung der elektrischen Eigenschaften

Die spezifische Kapazität wurde in bekannter Weise bei einer Wechselspannung von 120 Hz bei einer Wechselspannungsamplitude von 20 mV mit einer positiven Gleichspannungsvorspannung (BIAS) von 1.5 V gemessen. Der Leckstrom wurde durch Strommessung bei einer Gleichspannung von 28 V bestimmt. Die Messergebnisse sind in Tabelle 1 angegeben.

**Patentansprüche**

1.   Anode mit Sperrschicht auf Basis von Niob, bestehend aus einem Niob-Metallkern, einer leitenden Niob-Suboxidschicht und einer dielektrischen Sperrschicht aus Niobpentoxid.

2.   Anode nach Anspruch 1 mit einem Tantalgehalt in der dielektrischen Sperrschicht von 1500 bis 12000 ppm bezogen auf die Anode.

3.   Anode nach einem der Ansprüche 1 oder 2, wobei die Dicke der Suboxidschicht mindestens 50 nm beträgt.

**4.** Verfahren zur Herstellung von Anoden für Kondensatoren durch Versintern von Niobmetallpulvern und elektrolytische Erzeugung einer dielektrischen Sperrschicht auf der Oberfläche des Sinterkörpers, **dadurch gekennzeichnet, dass** der Elektrolyt für die Erzeugung der Sperrschicht eine wässrige Lösung enthaltend ein mehrzähniges organisches Säureanion, welches mit Niob stabile Komplexe ausbildet, enthält.

**5.** Verfahren nach Anspruch 4, **dadurch gekennzeichnet, dass** als Elektrolyt eine Tantaloxalatlösung eingesetzt wird.

**6.** Verfahren nach Anspruch 4 oder 5, **dadurch gekennzeichnet, dass** der Elektrolyt eine Leitfähigkeit von 0,15 bis 25 mS/cm aufweist.

**7.** Verfahren nach Anspruch 6, **dadurch gekennzeichnet, dass** die Leitfähigkeit des Elektrolyten mindestens 5 mS/cm beträgt.

**8.** Kondensator enthaltend eine Anode nach einem der Ansprüche 1 bis 3, oder eine Anode hergestellt nach einem Verfahren gemäß einem der Ansprüche 4 bis 7.

## Claims

**1.** Anode with barrier layer and based on niobium, consisting of a niobium metal core, a conducting niobium suboxide layer and a dielectric barrier layer of niobium pentoxide.

**2.** Anode according to Claim 1 having a tantalum content in the dielectric barrier layer of 1500 to 12 000 ppm, relative to the anode.

**3.** Anode according to Claim 1 or Claim 2, wherein the thickness of the suboxide layer is at least 50 nm.

**4.** Process for producing anodes for capacitors by sintering niobium metal powders and electrolytic production of a dielectric barrier layer on the surface of the sintered body, **characterized in that** the electrolyte for producing the barrier layer contains an aqueous solution containing a multidentate organic acid anion that forms stable complexes with niobium.

**5.** Process according to Claim 4, **characterized in that** a tantalum oxalate solution is used as electrolyte.

**6.** Process according to Claim 4 or 5, **characterized in that** the electrolyte has a conductivity ranging from 0.15 to 25 mS/cm.

**7.** Process according to Claim 6, **characterized in that** the conductivity of the electrolyte is at least 5 mS/cm.

**8.** Capacitor containing an anode according to any one of Claims 1 to 3 or an anode produced by a process according to any one of Claims 4 to 7.

## Revendications

**1.** Anode à couche d'arrêt à base de niobium, constituée d'un noyau de métal niobium, d'une couche de sous-oxyde de niobium conductrice et d'une couche d'arrêt diélectrique en pentoxyde de niobium.

**2.** Anode suivant la revendication 1, comportant une teneur en tantale dans la couche d'arrêt diélectrique de 1500 à 12 000 ppm par rapport à l'anode.

**3.** Anode suivant l'une des revendications 1 et 2, dans laquelle l'épaisseur de la couche de sous-oxyde est d'au moins 50 nm.

**4.** Procédé de préparation d'anodes pour condensateurs, par frittage de poudres de métal niobium et par production électrolytique d'une couche d'arrêt diélectrique sur la surface du corps fritté, **caractérisé en ce que** l'électrolyte contient, pour la production de la couche d'arrêt, une solution aqueuse contenant un anion acide organique polydentate qui forme des complexes stables avec le niobium.

**5.** Procédé suivant la revendication 4, **caractérisé en ce que**, comme électrolyte, on met en oeuvre une solution d'oxalate de tantale.

**6.** Procédé suivant la revendication 4 ou 5, **caractérisé en ce que** l'électrolyte présente une conductibilité de 0,15 à 25 mS/cm.

**7.** Procédé suivant la revendication 6, **caractérisé en ce que** la conductibilité de l'électrolyte est d'au moins 5 mS/cm.

**8.** Condensateur contenant une anode suivant l'une des revendications 1 à 3, ou une anode préparée selon un procédé suivant l'une des revendications 4 à 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19831280 A1

**In der Beschreibung aufgeführte Nicht-Patentliteratur**

- **J. Perriere ; J. Siejka.** *J. Electrochem. Soc.,* 1983, vol. 130 (6), 1260-1273